Europäisches Patentamt

(19) European Patent Office

Office européen des brevets

(11) Publication number: 0 072 866
A1

## (12) EUROPEAN PATENT APPLICATION
published in accordance with Art. 158(3) EPC

(21) Application number: 82900260.9

(22) Date of filing: 18.01.82

Data of the International application taken as a basis:

(86) International application number:
PCT/JP82/00015

(87) International publication number:
WO82/02607 (05.08.82 82/19)

(51) Int. Cl.³: G 05 D 3/12

(30) Priority: 17.01.81 JP 5299/81

(43) Date of publication of application:
02.03.83 Bulletin 83/9

(84) Designated Contracting States:
DE FR GB

(71) Applicant: Fanuc Ltd
5-1, Asahigaoka, 3-chome
Hino-shi, Tokyo 191(JP)

(72) Inventor: INABA, Hajimu
3-16, Asahigaoka 5-chome Hino-shi
Tokyo 191(JP)

(72) Inventor: SAKAKIBARA, Shinsuke
Cohpo-Kimikage 6 1-2-12, Naka
Kunitachi-shi Tokyo 186(JP)

(72) Inventor: NIHEI, Ryo
Mezon-Rira 202 1-34-7, Kichijojihoncho
Musashino-shi Tokyo 180(JP)

(74) Representative: Billington, Lawrence Emlyn et al,
HASELTINE LAKE & CO Hazlitt House 28 Southampton
Buildings Chancery Lane
London WC2A 1AT(GB)

(54) ROBOT CONTROL SYSTEM.

(57) A robot control system for positioning the movable unit of a robot at an instructed position by driving a fluid driving mechanism (1) comprising: a fluid drive control mechanism having a deceleration valve (41) for decelerating the speed of the fluid driving mechanism by reducing the quantity of exhaust gas, and normal and reverse direction solenoid valves (21) and (31) for driving the fluid driving mechanism (1) in normal and reverse directions respectively, detecting means (101, 105) for detecting the position of the movable unit, and a control unit (108) for calculating the difference between the instructed position ($\alpha_c$) and the present position ($\alpha_a$) of the detected movable unit, decelerating the fluid driving mechanism (1) by operating the deceleration valve (41) when the difference becomes equal to a first preset value $n_1$, operating both the normal and reverse direction solenoid valves (21, 31) for a prescribed period of time when the difference becomes equal to a second preset value $n_2(<n_1)$ and operating a brake (6) to stop the fluid driving mechanism (1).

Fig. 7

- 1 -

DESCRIPTION

ROBOT CONTROL SYSTEM

TECHNICAL FIELD

The present invention relates to a system for controlling a robot having a movable part such as a wrist drivable by a fluid actuator mechanism, and more particularly to a system for controlling a robot to bring the movable part accurately into any commanded position.

BACKGROUND ART

A variety of robots have found wide use in recent years for automated production processes.

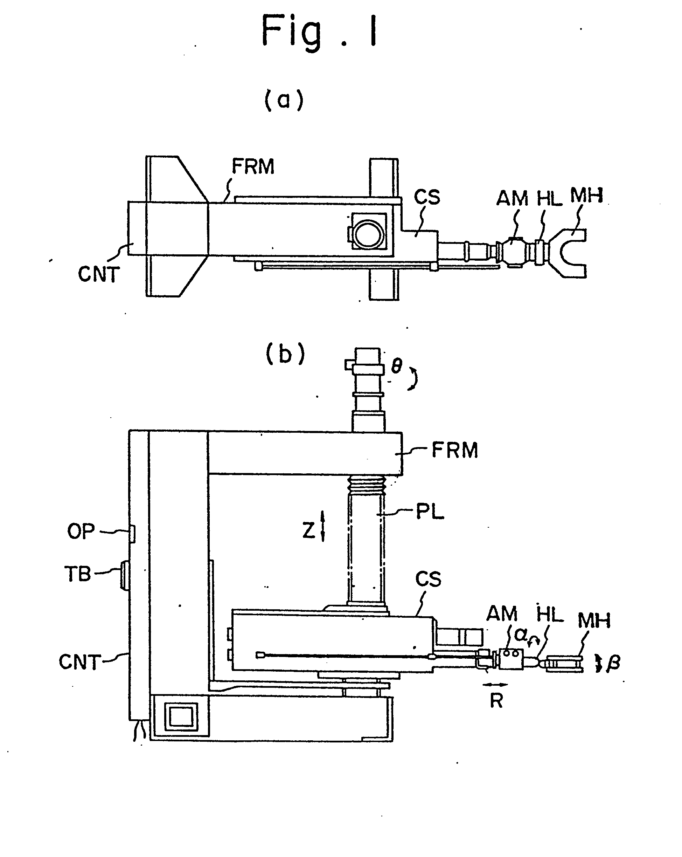

Such robots are controlled by robot command data which has been taught or edited in advance to perform services such as attachment and detachment of a workpiece or tool exchange upon request by a machine tool or the like. Fig. 1 shows such an industrial robot by way of example, Fig. 1 (a) being a plan view of the industrial robot and Fig. 1 (b) a side elevatiional view of the robot. The industrial robot comprises a mechanical hand MH for gripping a workpiece at the time of exchange for another, a wrist hand HL rotatable about an $\alpha$-axis and angularly movable up and down about a $\beta$-axis, an arm AM extensible and compressible along an R-axis, a casing CS movable up and down along a Z-axis and turnable about a $\theta$-axis or a

- 2 -

rotatable shaft PL, a frame FRM supporting the rotatable shaft PL, a teaching control board TB for teaching robot movements, a control panel OP for the operator to operate, and a control unit CNT for successively storing data as to taught contents such as positions or points of operation, speeds of operation, kinds of service, and the like as instructed by the teaching control board TB and for controlling the mechanical hand MH, the wrist HL, the arm AM, and the casing CS under the control by the contents as taught.

With such playback industrial robots, required service operations have been taught by the teaching control board in advance, and the data which has been taught (hereinafter referred to as a "robot command data") is stored in a memory in the control unit CNT. Each time the machine tool issues a service request, the series of robot command data are successively read out to thereby control movements of the mechanical hand MH, the wrist HL, the arm AM, and the casing CS for repeatedly servicing the machine tool. The robot command data is composed of information as to points to be serviced, information as to speeds of operation, service codes instructive of control of the hand at the points and exachange of singals between the robot and the machine tool, and the like. The teachings are carried out in general in the following order: (1) setting

- 3 -

of a memory address in whic to store robot command data; (2) positioning due to jogging or manual feed, (3) setting of positional information as to points and a speed command; and (4) setting of a robot service code. A series of robot operations with respect to the machine tool are indicated by repeating the sequence from (1) throught (4).

The wrist and other movable parts of the industrial robot which serves to engage or disengage workpieces have conventionally been driven for positional control by fluid pressure such as pneumatic or hydraulic pressure. However, since it is difficult to control the movable part such as the wrist to stop accurately at any commandeded positions, it has been customary to stop the movable part at two positions upon abutment while being angularly moved under pneumatic pressure or the like.

The prior arrangement has been disadvantageous in that the attitude (the position in the direction of the -axis) of the hand MH coupled to the wrist cannot be controlled freely, and hence the robot has been used in a limited range of applications.

Accordingly, it is an object of the present invention to provide a system for controlling a robot to position and stop a movable part such as a wrist accurately in any desired commanded positions even if the movable part is driven by a fluid actuator mechanism utilizing pneumatic

- 4 -

or hydraulic pressure, so that the robot will find a wider range of applications.

Furthermore, another object of the present invention is to provide a system for controlling a robot to prevent "runaway" or uncontrolled operation thereof due to erroneous operation of a positional control system for the movable part such as a wrist.

## DISCLOSURE OF THE INVENTION

According to the present invention, a system for controlling a robot to position a movable part of the robot at a commanded location by driving a fluid actuator mechanism, comprises forward and reverse solenoid-operated valves for driving the fluid actuator mechanism in forward and reverse directions, respectively, a fuild actuator control mechanism having a speed reducer valve for reduding the speed of the fluid actuator mechanism by restricting an amount of exhaust, detector means for detecting the position of the movable part, and a control unit for calculating the difference between a commanded position and a current position as detected of the movalble part, the control unit being arranged such that when the difference is equal to a predetermined first value $n_1$, the speed reducer valve is actuated to reduce the speed of the fluid actuator mechanism, and when the difference is equal to a predetermined second value $n_2$ ($< n_1$), both of the forward and reverse solenoid-operated valves are operated for a predetermined interval of time and a brake is actuated to stop the fluid actuator mechanism.

With this arrangement, the positioning accuracy can be increased even if the movable part of the robot is driven by the fluid actuator mechanism.

Further according to the present invention, the control unit includes means for checking whether the detector has produced a positional pulse within a given interval of time while either one of the forward and reverse solenoid-operated valve is being in operation. When no pulse is generated within the given interval of time, a system for controlling the movable part under fluid pressure is regarded as suffering from an erroneous operation to thereby de-energize the forward and reverse solenoid-operated valves. Thus, a malfunction of the positional control system can be detected with ease, with the result that the movable part will not "run away" or go uncontrolled, and hence the workpiece, the machine tool and the like will not be damaged.

### BRIEF DESCRIPTION OF THE DRAWINGS

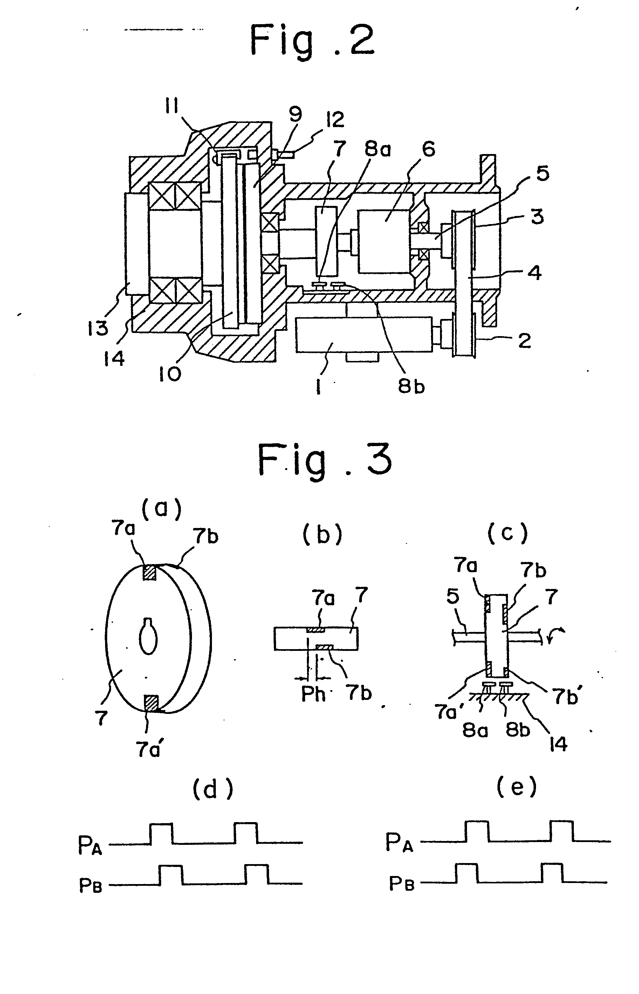

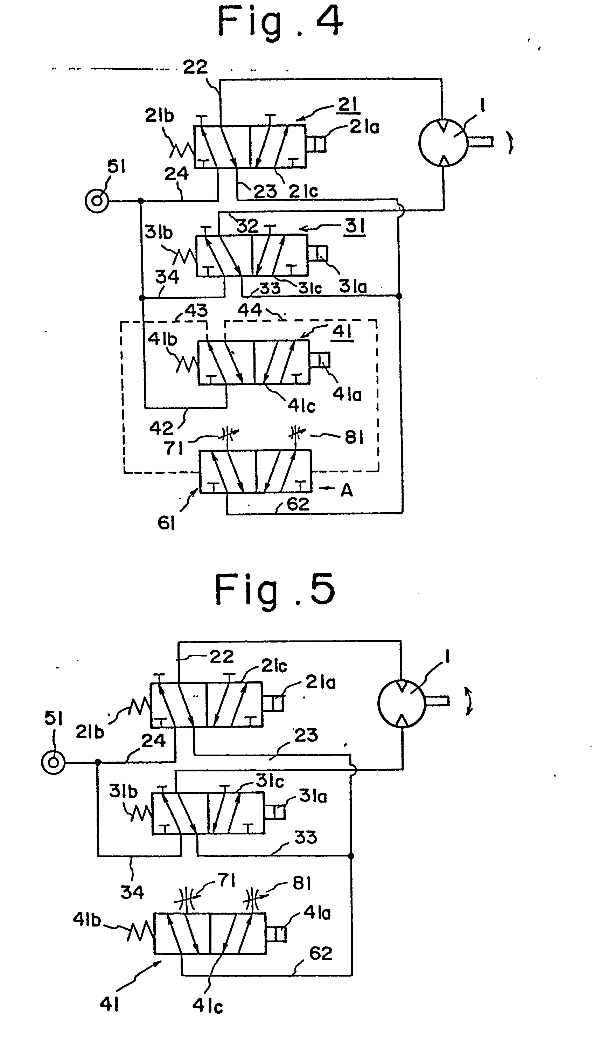

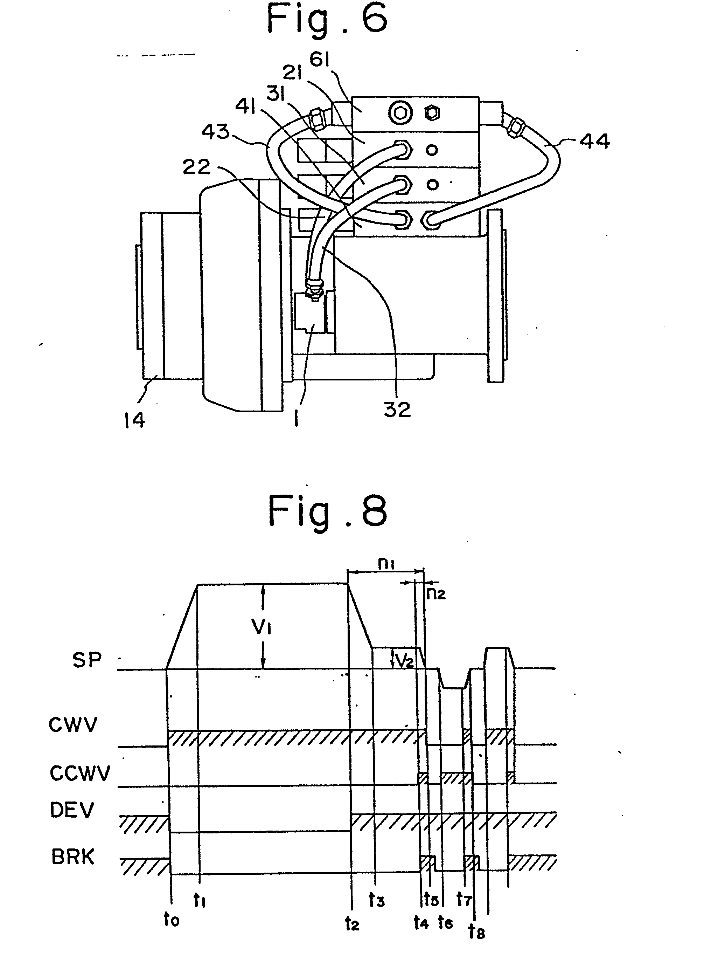

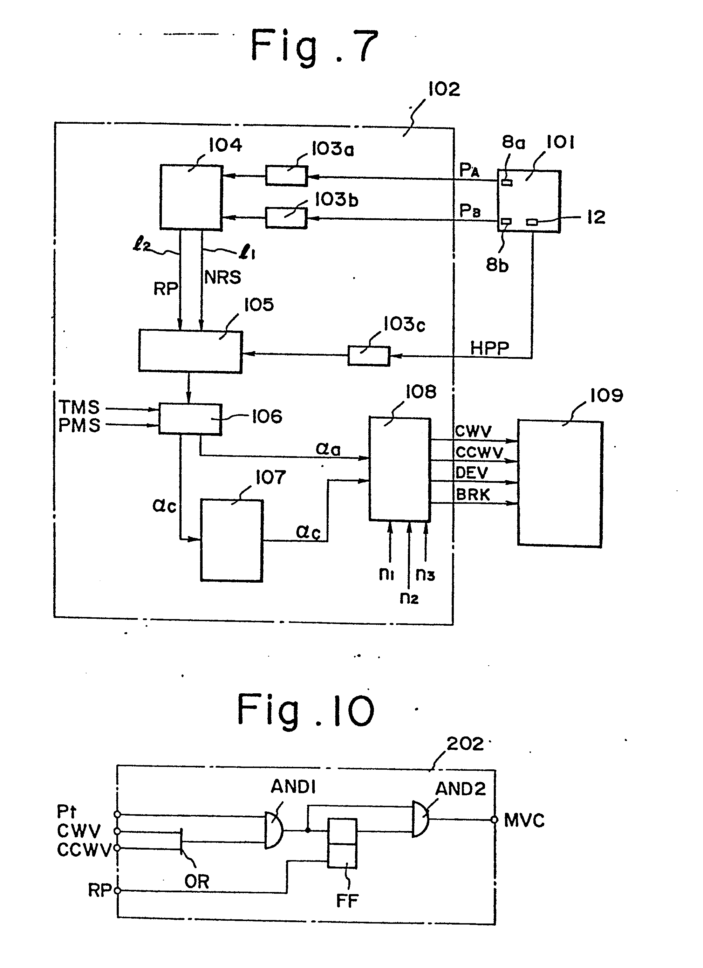

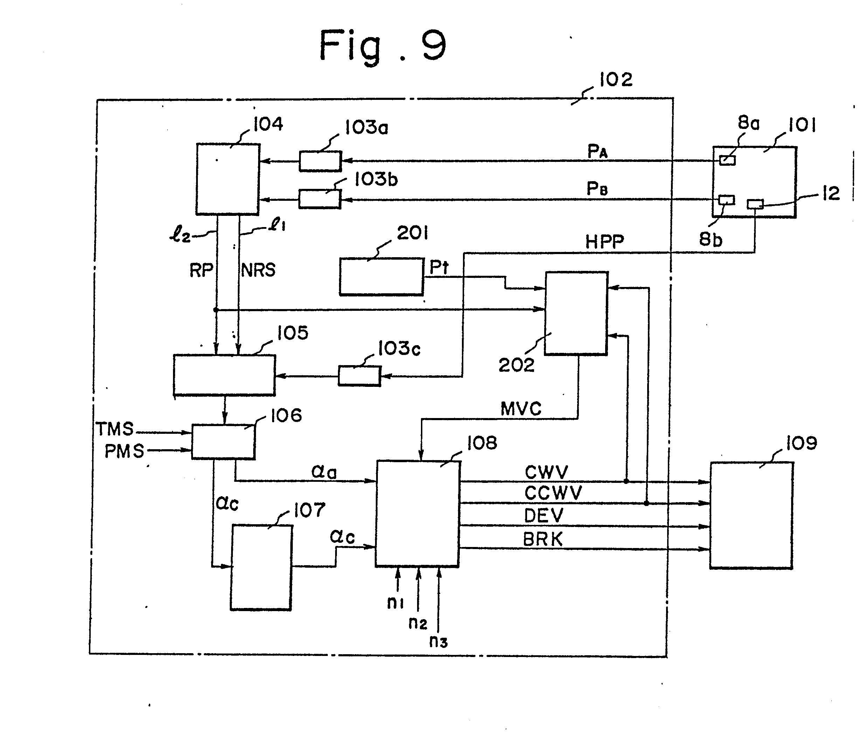

Fig. 1 are a plan view and a side elevational view of a general industrial robot; Fig. 2 is a cross-sectional view of a wrist mechanism of an industrial robot according to the present invention; Fig. 3 are views illustrative of the principle of detecting the position of a wrist of the wrist mechanism; Figs. 4 and 5 are circuit diagrams of pneumatic control mechanisms for stopping, rotating in forward and reverse directions and slowing an air motor; Fig. 6 is an elevational view of a pneumatic mechanism mounted on the wrist; Fig. 7 is a circuit diagram of s system according to the present invention; Fig. 8 is a timing chart for operations of the system of the present invention; Fig. 9 is a block diagram of an arrangement for detecting an erroneous operation; and Fig. 10 is a circuit diagram of an erroneous operation monitoring circuit shown in Fig. 9.

BEST MODE FOR CARRYING OUT THE INVETNION

An embodiment of the present invention will now be described in detail with reference to the drawings. Fig. 2 is a cross-sectional view of a wrist mechanism of an industrial robot according to the present invention, and Fig. 3 are views illustrative of the principle of detecting the position of a wrist of the wrist mechanism.

Fig. 2 shows an air motor 1 drivable by compressed air supplied from a source of air, pulleys 2, 3, and a belt 4 for cooperating with the pulleys 2, 3 in transmitting rotative power from the air motor 1 to a shaft 5 supported by bearings. A brake mechanism 6 is mounted on the shaft 5. A sensor disc 7 rotates with the shaft 5 and has on its circumferential portion two pairs of magnets 7a, 7a'; 7b, 7b' embedded therein as shown in Figs. 3(a) - (c). The magnets 7a, 7a' are embedded in one surface thereof and angularly spaced $180^{\circ}$ from each other across the shaft of the disc 7, and the magnets 7b, 7b' are embedded in the other surface thereof and angularly spaced $180^{\circ}$ from each other. As shown in Fig. 3(b), the magnets 7a, 7b and the magnets 7a', 7b' are angularly spaced from one another by a half phase Ph. A pair of magnetic sensors 8a, 8b are fixed to a body 14 in confronting relation to the magnets 7a, 7a', 7b, 7b'. The magnetic sensors 8a, 8b produce two kinds of pulse signals $P_A$, $P_B$, respectively, which have the phase relationships as shown in Figs. 3(d), (e) dependent on whether the air motor 1 or the shaft 5 rotates in a forward or reverse direction. Two such pulses are generated each time the shaft 5 makes one revolution. They have the relationship as illustrated in Fig. 3(d) when the shaft 5 rotates in a righthand direction, and the relationship as illustrated in Fig. 3(e) when the shaft 5 rotates in a lefthand direction.

Designated at 9 is a speed reducer of the harmonic drive type, 10 a bracket, 11 a dog for generating a home position signal indicative of an original position, and 12 a proximity switch for detecting the dog 11. The dog 11 is mounted on the bracket 10, and the proximity switch 12

- 8 -

is embedded in the body 14.  When the bracket 10 is rotated by the  speed reducer 9 to cause the dog 11 to approach the proximity switch 12 within a certain distance, the proximity switch 12 generates a home position signal. Indicated at 13 is an attachment for a hand MH (Fig. 1), and 14  is the body.

Figs. 4 and 5 are circuit diagrams of pneumatic control mechanisms for stopping, rotating in forward and reverse directions and slowing an air motor, and Fig. 6 is an elevational view of a pneumatic mechanism mounted on the wrist.

Designated in Fig. 4 at 1 is an air motor, and 21, 31, 41 solenoid-operated valves for rotating the air motor 1 in forward and reverse directions and slowing the air motor 1, respectively, the solenoid-operated valves having solenoids 21a, 31a, 41a, return springs 21b, 31b, 41b, and directional control valves 21c, 31c, 41c, respectively. The solenoids are energizable by drive signals to actuate the directional control valves.  Indicated at 51 is a source of air for supplying compressed air, 61 a master valve, 71, 81 restrictors, and 22, 23, 24, 32, 33, 34, 42, 43, 44, 62 air passages for compressed air.  When the solenoids 21a - 41a remain de-energized, the directional control valves 21c - 41c are in the illustrated position to provide communication between the air passages 22, 23, the air passages 32, 33, and the air passages 42, 43. No compressed air is supplied from the source of air 51 to the air motor 1, which is therefore held at rest. When the solenoid 21a of the solenoid-operated valve 21 for rotating the air motor in the forward direction is energized by a forward-rotation drive signal, the directional control valve 21c is actuated to connect the air passages 24, 22. Compressed air from the source of air 51 flows from the air passages 24, 22 to the air motor 1 to the air passages 32, 33, 62 and to the master valve 61 from which the air is discharged into the atmosphere through an air discharge port. Thus, the air motor 1 rotates in the forward direction. When the forward-rotation drive signal is turned off, the solenoid 21a is de-energized to allow the directional control valve 21c to return to the illustrated position under the force of the return spring 21b.

When the solenoid 31a of the solenoid-operated valve 31 for rotating the air motor in the reverse direction is energized by a reverse-rotation drive signal, the directional control valve 31c is actuated to connect the air passages 34, 32. The air motor 1 is then rotated in the reverse direction by compressed air which flows from the source of air 51 to the air passages 34, 32 to the air motor 1 to the air passages 22, 23 and to the master valve 61 from which the air is discharged into the atmosphere

- 10 -

through the air discharge port.

When the solenoid 41a of the speed reducer solenoid-operated valve 41 for slowing the air motor while at least one of the solenoid-operated valves 21, 31 is being actuated, the directional control valve 41c is operated to connect the air passages 42, 44. Compressed air flows from the source of air 51 through the air passages 42, 44 into the master valve 61 to shift the latter in the direction of the arrow A until the air passage 62 is connected to the restrictor 71. As a result, the air is discharged through the restrictor 71, and the amount of air flowing through the air motor 1 is reduced. The air motor 1 now rotates at a lower speed.

By thus controlling the solenoid-operated valves 21, 31, 41 as desired to control the direction of flow and the amount of compressed air fed to the air motor 1, the air motor 1 can be controlled for the forward, reverse and slow rotation. The appearance of a pneumatic mechanism mounted on the body 14 of the wrist is shown in Fig. 6. Identical parts in Fig. 6 are denoted by identical reference numerals in Fig. 4.

Fig. 5 shows a pneumatic control mechanism according to another embodiment. Identical parts in Fig. 6 are denoted by identical reference numerals in Fig. 4. The pneumatic control mechanism of Fig. 5 is different from

- 11 -

that of Fig. 4 in that the solenoid 41a of the solenoid-operated valve 41 for rotating the air motor at low speeds is designed to generate a larger electromagnetic force, the master valve 61 and the air passages 43, 44 are dispensed with, and the solenoid-operated valve 41 doubles as a master valve.

Figs. 7 and 8 are illustrative of a robot control system according to an embodiment of the present invention. A sensor unit 101 has a pair of magnetic sensors 8a, 8b (Fig. 3) mounted on the wrist and a proximity switch 12 (Fig. 2) for producing pulse signals $P_A$, $P_B$ (Figs. 3(d), (e)) and a home position signal HPP as the air motor 1 rotates. A robot control unit 102 has receivers 103a - 103c, a pulse processing circuit 104, a current-position counter 105 for storing data on a current position of the wrist in the direction of rotation ($\alpha$-axis), a gate circuit 106, a memory 107 for storing data as taught, and a comparator 108. A driver circuit 109 serves to drive the solenoid-operated valves 21, 31, 41.

The pulse processing circuit 104 is supplied with the pulse signals $P_A$, $P_B$ and checks a phase relationship between the pusle signals $P_A$, $P_B$. The pulse processing circuit 104 then delivers a forward/reverse signal NRS (forward when NRS = "1", and reverse when $\overline{NRS}$ = "0") over a line $\ell_1$ and a single rotation pulse RP over a line $\ell_2$ each

- 12 -

time the air motor 1 rotates through a predetermined angle. The rotation pulse RP is prepared from the pulse signals $P_A$, $P_B$ and has a frequency m times (m > 1) greater than the frequency of the pulse signals $P_A$, $P_B$. The current-position counter 105 stores and produces as an output data on a rotational position of the wrist with respect to the home position. More specifically, the counter 105 is reset each time the home position signal HPP is generated, and counts up or down the rotation pulses RP dependent on the forward/reverse signal NRS. For example, the counter 105 counts up the pulses when the wrist rotates in the forward direction (NRS = "1") and counts down the pulses when the wrist rotates in the reverse direction, for thereby storing and producing as an output data on a rotational position of the wrist. The gate circuit 106 passes a content $\alpha_a$ of the current-position counter 105 to the memory 107 or the comparator 108 dependent on the robot teaching/playback mode. More specifically, in the robot teaching mode (TMS = "1"), when a position teaching button on a teaching control board is depressed, data stored in the current-position counter 105 on the current position $\alpha_a$ of the wrist in the direction of the $\alpha$-axis is written in the memory 107 at a predetermined address. In the robot playback mode (PMS = "1"), the content of the current-position counter 105 is supplied as an input to the

- 13 -

comparator 108. The comparator 108 compares at all times upon playback a commanded position $\alpha_c$ in the direction of the $\alpha$-axis as read out of the memory 107 which stores taught data with the current position $\alpha_a$ of the wrist, and produces as outputs control signals CWV, CCWV, DEV, BRK for controlling the solenoid-operated valves 21 - 41 (Fig. 4) and the brake 6 (Fig. 2) dependent on the magnitude of a difference $\alpha_e$. More specifically, when the difference $\alpha_e$ (= $\alpha_c - \alpha_a$) between the commanded position and the current position is positive, the comparator 108 produces the forward-drive signal SWV, and when the difference is negative, the comparator 108 produces the reverse-drive signal CCWV. When the absolute value of the difference $\alpha_e$ is smaller than a first predetermined value $n_1$, the comparator generates the slow-drive signal DEV, and when the absolute value of the difference $\alpha_e$ is below a second predetermined value $n_2$ ($n_2 < n_1$), the comparator 108 generates both of the forward and reverse drive signals CWV, CCWV for a predetermined interval of time and the brake drive signal BRK.

Operation of the robot control system of the present invention will now be described with reference to the timing chart of Fig. 8. Designated in Fig. 8 at SP is a speed of rotation of the air motor 1.

When a rotational position command $\alpha_c$ for the

- 14 -

wrist is read out of the memory 107 upon playback (PMS = "1"), the comparator 108 compares such a commanded position $\alpha_c$ with a current position $\alpha_a$ as supplied from the current-position counter 105 via the gate circuit 106, and produces as an output the forward drive signal CWV or the reverse drive signal CCWV dependent on the sign of the difference $\alpha_e$ (= $\alpha_c - \alpha_a$). The following description is based on the assumption that the difference $\alpha_e$ is positive at an initial stage $t_0$. With the forward drive signal CWV = "1" being produced, the driver circuit 109 energizes the solenoid 21a of the solenoid-operated valve 21 (Fig. 4) to rotate the air motor 1 in the forward direction. The air motor 1 starts to rotate, reaches a normal speed $v_1$ at a time $t_1$, and then continues to rotate at a constant speed.

While the air motor 1 is being rotated, the magnetic sensors 8a, 8b of the sensor unit 101 generate pulse signals $P_A$, $P_B$ each time the air motor 1 rotates through a predetermined angle. The pulse signals $P_A$, $P_B$ are fed through the receivers 103a, 10b into the pulse processing circuit 104, which checks a phase relationship between the pulse signals $P_A$, $P_B$ and delivers as outputs a forward/reverse signal NRS (= "1") and rotation pulses RP. The current-position counter 105 counts up or down dependent on the direction of rotation (NRS = "1" or "0") of the air motor 1. As a consequence, the content of the current-position counter 105 is indicative of a current position $\alpha_a$ of the wrist at all times. As the air motor 1 rotates, the current position $\alpha_a$ approaches the commanded position $\alpha_c$ with the difference $\alpha_e$ becoming progressively smaller. At a time $t_2$, the difference $\alpha_e$ (= $\alpha_c - \alpha_a$) is equal to the first predetermined value $n_1$, which may be a numerical value "20" for example. When $\alpha_e = n_1$, the comparator 108 produces the slow-drive signal DEV (= "1") as an output to enable the driver circuit 109 to energize the solenoid 41a of the solenoid-operated valve 41 (Fig. 4) for thereby slowing down the air motor 1. The air motor 1 is thus decelerated until it reaches a normal speed $v_2$ at a time $t_3$, and thereafter continues to rotate at the speed $v_2$. Continued rotation causes the difference $\alpha_e$ to be reduced until it becomes equal to the second predetermined numerical value $n_2$ such as 1 at a time $t_4$. When $\alpha_e = n_2$, the comparator 108 produces as outputs the reverse drive signal CCWV (= "1") and the brake signal BRK (= "1"). Therefore, both of the forward and reverse drive signals CWV, CCWV become "1" at the time $t_4$, whereby compressed air flows into the air motor 1 in opposite directions from the air passages 22, 32 (Fig. 4) to rapidly reduce the rotative power produced by the air motor 1. Since the air motor 1 has been rotating at the low speed of $v_2$ from the time $t_2$ on and the brake 6 is applied at the time $t_4$, the air motor

- 16 -

$t_5$ which is thus rendered weak in rotative power will immediately stop at a time $t_5$. At the time $t_5$, the forward and reverse drive signals CWV, CCWV become "0", and no compressed air flows into the air motor 1 from the time $t_5$ on.

When the air motor 1 is stopped, the comparator 108 determines whether the difference $\alpha_e$ (= $\alpha_c - \alpha_a$) between the commanded position $\alpha_c$ and the current position $\alpha_a$ upon stoppage is below a predetermined value $n_3$ or not. The predetermined value $n_3$ may be selected to be equal to $n_2$ or to meet the relationship $n_2 > n_3$.

If $|\alpha_e| < n_3$, then the wrist has been located properly at a target position, and the rotational control is completed.

If $\alpha_e < 0$ and $|\alpha_e| > n_3$, then the wrist has gone beyond the target position, and if $\alpha_e > 0$ and $|\alpha_e| > n_3$, then the wrist has stopped short of the target position. Thereafter, positional correction will be effected in the direction of the -axis. When the wrist has exceeded the target position ($\alpha_e < 0$ and $|\alpha_e| > n_3$), the comparator 108 produces the reverse drive signal CCWV (= "1") at a time $t_6$ to actuate the solenoid-operated valve 31 (Fig. 4) to rotate the air motor 1 in the reverse direction, and generates the forward drive signal CWV (= "1") and the brake signal BRK (= "1") at a time $t_7$. As with the control during an interval between the times $t_4$, $t_5$, the air motor 1 rotates through a certain angular interval, and then stops at a time $t_8$. After the air motor 1 has stopped, the comparator 108 determines again whether $\alpha_e$ is below $n_3$ or not. The above corrective operation is repeated until $|\alpha_e| < n_3$, whereupon the rotational control is finished.

While in the foregoing embodiment the wrist is stopped at the target position with the air motor 1 rotating in the forward direction, substantially the same control as above will be performed for stopping the wrist at the target position while rotating the air motor 1 in the reverse direction. The intervals ($t_4 - t_5$, $t_7 - t_8$) required for the signals CWV, CCWV to become "0" after $|\alpha_e| = n_2$ can experimentally be determined to equalize the signals CWV, CCWV to "1" during such intervals.

Although in the foregoing description the wrist is positioned in the direction of rotation (the direction of the $\alpha$-axis), the present invention is applicable not only to the wrist but also to the arm and other movable parts, and can be embodied in an application in which the wrist is to be positioned in a straight direction.

The description has been directed to a system having an actuator mechanism in the form of an air motor. However, a fluid actuator mechanism using other fluids such as oil may also be used.

- 18 -

With the present invention, a wrist actuatable by a fluid actuator can be positioned to a nicety in any desired position in the direction of rotation, and a robot can find a much wider range of applications.

When the rotational control system for the wrist malfunctions, the wrist cannot be stopped at a commanded position, and may also go uncontrolled in the direction of rotation to damage the workpiece and machine tool. As an example, if the magnetic sensors 8a, 8b (Fig. 2) are broken or lead wires from the magnetic sensors are cut off, then no rotation pulse RP is generated even when the air motor rotates, with the result that the wrist will run out of control. If the solenoid-operated valves are not actuated the way they should be upon energization of their solenoids, then the air motor fails to rotate.

For the above reasons, malfunctions of the rotational control system for the wrist should immediately be detected upon its occurrence.

Fig. 9 is a block diagram of an arrangement according to the present invention for detecting malfunctions of the rotational control system for the wrist. Identical parts in Fig. 9 are denoted by identical reference characters shown in Fig. 7, and will not be described in detail.

A timer 201 produces a time pulse Pt for an every predetermined interval of time such as 400 msec., for example. A malfunction monitor circuit 202 is supplied with the forward drive signal CWV, the reverse drive signal CCWV, the rotation pulse RP, and the time pulse Pt. When at least one of the forward drive signal CWV and the reverse drive signal CCWV is "1", the malfunction monitor circuit 202 ascertains whether the rotation pulse RP is generated with a predetermined period of time (which is an interval between time pulses Pt generated). If no rotation pulse is generated within such a time period, then the malfunction monitor circuit 202 determines that the rotational control system for the wrist is malfunctioning, and supplies a solenoid-operated valve cutoff signal MVC to the comparator 108. In response to such a solenoid-operated cutoff signal MVC = "1", the comparator 108 causes both of the forward drive signal CWV and the reverse drive signal CCWV to be "0" for stopping the air motor 1, or generates an alarm.

Fig. 10 is a circuit diagram of the malfunction monitor circuit 202 as shown in Fig. 9. The malfunction monitor circuit 202 includes an OR gate OR, AND gates AND1, AND2, and a flip-flop FF which is initially reset. If the time pulse Pt is generated when the forward drive signal CWV or the reverse drive signal CCWV is "1", then the AND gate AND1 produces an output of "1", and the flip-flop FF is set by a negative-going edge of the output from the AND gate AND1. If no rotation pulse RP is produced under such a condition before a next time pulse Pt is generated, then the output of the AND gate AND2 becomes "1" in response to the next time pulse Pt, whereupon the solenoid-operated vavle cutoff signal MVC (= "1") is supplied to the comparator 108. If a rotation pulse RP is produced prior to the next time pulse Pt, however, the flip-flop FF is reset, and no solenoid-operated valve cutoff signal MVC is produced.

In the foregoing description, no rotation pulse RP is generated with a predetermined interval of time when the rotational control system for the wrist undergoes a malfunction. Where the air motor 1 rotates in a direction opposite to a commanded direction due to malfunctioning of the solenoid-operated valves or the like, the malfunction monitor circuit 202 (Fig. 9) may be supplied with a forward/reverse signal indicative of a direction of rotation of the air motor 1 for monitoring the direction of rotation.

Positioning of the wrist in the direction of rotation (the direction of the α-axis) has been described above. Since the wrist can be accurately be stopped at any desired position in the direction of rotation, the present invention will allow robots to find a wider range of

- 21 -

applications.  The ability to detect malfunctions of the
rotational control system for the wrist in a simple manner
prevents the wrist from "runaway" or uncontrolled
operation, which would otherwise damage the workpiece,
machine tool, and the wrist mechanism.

- 22 -

WHAT IS CLAIMED IS:

1.       A system for controlling a robot to position a movable part of the robot at a commanded location by driving a fluid actuator mechanism, comprising forward and reverse solenoid-operated valves for driving the fluid actuator mechanism in forward and reverse directions, respectively, a fuild actuator control mechanism having a speed reducer valve for reduding the speed of the fluid actuator mechanism by restricting an amount of exhaust, detector means for detecting the position of the movable part, and a control unit for calculating the difference between a commanded position and a current position as detected of the movalble part, the control unit being arranged such that when the difference is equal to a predetermined first value $n_1$, said speed reducer valve is actuated to reduce the speed of the fluid actuator mechanism, and when the difference is equal to a predetermined second value $n_2$ ($< n_1$), both of said forward and reverse solenoid-operated valves are operated for a predetermined interval of time and a brake is actuated to stop the fluid actuator mechanism.

2.       A system according to claim 1, wherein said control unit is arranged such that when the difference between the commanded position and the current position is greater than a predetermined value after said fluid actuator mechanism has been stopped, one of said forward and reverse solenoid-operated valves is actuated for a predetermined interval of time dependent on the sign of said difference with said speed reducer valve being actuated, and then both of said forward and reverse solenoid-operated valves are actuated for a predetermined interval of time and the brake is operated to control the movable part to be positioned at said commanded position.

3. A system according to claim 1, wherein said detector means comprises a pulse generating means for generating a pulse each time said fluid actuator mechanism is actuated a predetermined interval, and a counter for counting up or down dependent on the direction in which the fluid actuator mechanism is actuated.

4. A sytem according to claim 3, wehrein said control unit includes means for checking whether said pulse is generated within a predetermined interval of time while one of said forward and reverse solenoid-operated valves is being actuated, said forward and reverse solenoid-operated valves being de-energizable when no pulse is generated within said predetermined interval of time by way of determining that a system for driving and controlling the movable part suffers from a malfunction.

# Fig. 1

## (a)

## (b)

# Fig.2

# Fig.3

(a)

(b)

(c)

(d)

(e)

# Fig.4

# Fig.5

# Fig.6

# Fig.8

# Fig.7

# Fig.10

Fig . 9

# INTERNATIONAL SEARCH REPORT

**0072866**

International Application No **PCT/JP82/00015**

### I. CLASSIFICATION OF SUBJECT MATTER (if several classification symbols apply, indicate all)

According to International Patent Classification (IPC) or to both National Classification and IPC

Int. Cl.$^3$ G05D 3/12

### II. FIELDS SEARCHED

**Minimum Documentation Searched**

| Classification System | Classification Symbols |
|---|---|
| I P C | G05D 3/00, G05B 19/00, G05B 23/02 |

**Documentation Searched other than Minimum Documentation to the Extent that such Documents are Included in the Fields Searched**

| | |
|---|---|
| Jitsuyo Shinan Koho | 1965 – 1982 |
| Kokai Jitsuyo Shinan Koho | 1971 – 1982 |

### III. DOCUMENTS CONSIDERED TO BE RELEVANT

| Category* | Citation of Document, with indication, where appropriate, of the relevant passages | Relevant to Claim No. |
|---|---|---|
| Y | JP,A, 49-116483 (Toyoda Machine Works, Ltd.) 7. November. 1974 (7.11.74) | 1 – 4 |
| Y | Shoryoku to Jidoka, Vol. 10, No. 12, December, 1979 (Tokyo), Nakanishi Koji "Shoshinsha notameno Jittai Kukiatsu Kairo" P. 62-63 | 1 – 4 |
| Y | JP,A, 55-140906 (Izumi Denki Corporation) 4. November. 1980 (4.11.80) | 4 |

\* Special categories of cited documents:

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

### IV. CERTIFICATION

| Date of the Actual Completion of the International Search | Date of Mailing of this International Search Report |
|---|---|
| April 12, 1982 (12.4.82) | April 26, 1982 (26.04.82) |

| International Searching Authority | Signature of Authorized Officer |
|---|---|
| Japanese Patent Office | |

Form PCT/ISA/210 (second sheet) (October 1977)